# FASCICULE DE BREVET EUROPEEN

(11) **EP 0 989 953 B1**
(45) Date de publication et mention de la délivrance du brevet: **27.03.2002**
(21) Numéro de dépôt: 98925344.8
(22) Date de dépôt: 12.06.1998
(51) Int. Cl.: C01B 25/234

(54) **PROCEDE DE CONCENTRATION D'ACIDE PHOSPHORIQUE**
VERFAHREN ZUR AUFKONZENTRIERUNG VON PHOSPHORSÄURE
METHOD FOR CONCENTRATING PHOSPHORIC ACID

(30) Priorité: 12.06.1997 BE 9700508
(43) Date de publication de la demande: 05.04.2000
(73) Titulaire: Ecophos, 3000 Leuven (BE)
(72) Inventeur: TAKHIM, Mohamed, Khouribga (MA)
(74) Mandataire: Claeys, Pierre
(86) Numéro de dépôt international: BE9800088
(87) Numéro de publication internationale: WO9856713

(56) Documents cités:
- WO-A-97/00714
- CHEMICAL ABSTRACTS, vol. 110, no. 16, 17 avril 1989 Columbus, Ohio, US; abstract no. 138052q, page 166; XP002035258 cité dans la demande & U. GLABISZ ET AL.: "Manufacturing of pure phosphate solutions from wet-process phosphoric acid using melamine phosphate" PR. NAUK. AKAD. EKON. IM. OSKARA LANGEGO WROCLAWIU, vol. 426, 1988, pages 161-166,
- CHEMICAL ABSTRACTS, vol. 60, no. 6, 16 mars 1964 Columbus, Ohio, US; abstract no. 6515e, XP002011623 & JP 03 811105 C (TAKI FERTILIZER MANUFG. CO., LTD.) 4 juillet 1963

## Description

La présente invention est relative à un procédé de concentration d'acide phosphorique en solution dans un solvant, comprenant
- une addition à cette solution d'un agent précipitant capable de former avec l'acide phosphorique un sel peu soluble dans le solvant, cette addition étant effectuée en une quantité suffisante pour provoquer une précipitation du sel d'acide phosphorique de l'agent précipitant dans le solvant,
- une séparation à l'état solide du sel précipité d'acide phosphorique de l'agent précipitant à partir du solvant, et
- un traitement thermique d'un sel d'acide phosphorique.

Dans l'industrie des phosphates, on rencontre beaucoup de solutions d'acide phosphorique diluées, sous la forme d'eaux résiduaires, par exemple des solutions de lavage, des résidus d'extraction liquide-liquide, ou sous la forme d'acide produit par les procédés d'attaque diluée. Ces dernières solutions peuvent ensuite être concentrées par une évaporation énergivore du solvant, c'est-à-dire de l'eau, habituellement jusqu'à 40% ou 56% en P₂ O₅ (solution brute, parfois appelée acide "vert" ou "noir" dans le cas d'attaque sulfurique).

On connaît aussi divers procédés de purification d'acide phosphorique en solution aqueuse, qui simultanément ou subsidiairement peuvent convenir pour concentrer des solutions aqueuses d'acide phosphorique.

Dans la WO-A-97/00714, on décrit en particulier un procédé tel qu'indiqué au début. Par addition d'un composé organique déterminé à la solution aqueuse d'acide phosphorique, on fait précipiter un phosphate de ce composé organique, on le sépare sous forme d'un gâteau de filtration et on soumet le phosphate filtré à des jets de vapeur d'eau. La vapeur d'eau a pour effet d'entraîner le composé organique déterminé, en permettant de récolter de l'acide phosphorique purifié et relativement concentré. Il faut noter que ce procédé nécessite l'évaporation de grandes quantités d'eau pour l'injection de jets de vapeur sur le phosphate, en plus d'une séparation de l'eau et du composé organique après l'entraînement à la vapeur.

Dans l'abrégé des Chemical Abstracts, vol. 86, 1977, p. 108, 86 : 191964a, on décrit la précipitation de phosphate de 1,4-dioxanne dans une solution d'acide phosphorique. Un acide phosphorique purifié peut être séparé à partir de ce précipité en effectuant une distillation azéotropique, c'est-à-dire en réalisant un azéotrope d'eau - dioxanne éliminable. Une redissolution des cristaux d'acide phosphorique obtenus est prévue avec une concentration par évaporation de l'eau.

Comme on peut le voir, dans tous ces procédés, la concentration nécessite un apport d'énergie important pour transformer des quantités non négligeables d'eau en vapeur d'eau.

La présente invention a pour but de remédier à ces problèmes, en mettant au point un procédé de concentration d'acide phosphorique qui ne présente pas les inconvénients mentionnés ci-dessus.

Pour résoudre ce problème, il est prévu, suivant l'invention, un procédé de concentration d'acide phosphorique tel qu'indiqué au début, dans lequel le traitement thermique comprend
- par chauffage, une fusion d'un sel d'acide phosphorique qui est issu dudit sel précipité séparé de l'agent précipitant, est un sel d'un composé volatil ayant un point d'ébullition inférieur à celui de l'acide phosphorique, et présente une température de décomposition thermique inférieure au point d'ébullition de l'acide phosphorique,
- une décomposition thermique du sel fondu avec séparation par évaporation du composé volatil susdit, et
- une récolte d'acide phosphorique concentré, non évaporé.

Ce procédé présente l'avantage essentiel de ne pas devoir chauffer d'eau. Une décomposition thermique du sel en ses deux composants est obtenue par chauffage direct du sel à l'état solide et l'un des composants s'évapore en abandonnant un acide phosphorique très concentré, à un état de liquide visqueux ou de cristaux.

Suivant un mode de réalisation du procédé suivant l'invention, l'agent précipitant est ledit composé volatil ayant un point d'ébullition inférieur à celui de l'acide phosphorique et le sel d'acide phosphorique en fusion est ledit sel précipité séparé d'acide phosphorique de l'agent précipitant, l'agent précipitant évaporé étant éventuellement recyclé vers ladite étape d'addition. Le phosphate obtenu lors de la précipitation et de la séparation est ici utilisé directement pour le traitement thermique. De préférence, l'agent précipitant est directement recyclé sans autre mesure dans l'étape d'addition.

Suivant un mode de réalisation avantageux du procédé suivant l'invention, l'agent précipitant est un composé organique qui présente une molécule de caractère acido-basique au sens de Lewis présentant un ou des sites actifs pourvus d'un doublet électronique libre et qui donne lieu avec l'acide phosphorique à une réaction équilibrée.

Avantageusement, le composé organique suivant l'invention est une amine primaire, secondaire ou tertiaire ou une amine aromatique, comme par exemple de l'aniline, de la p-toluidine ou de la 3-méthyl-2-naphtylamine. On peut bien sûr également prévoir des dérivés ou isomères de ces substances. Parmi ceux-ci on peut par exemple citer leurs sels, comme du phosphate, du sulfate ou du chlorure d'aniline, ou des dérivés alkyle inférieur, par exemple de la méthylaniline, ou encore des dérivés nitro, par exemple de la nitroaniline. D'autres substances pourraient éventuellement satisfaire également aux critères énoncés dans le procédé. On pourrait considérer par exemple du pyrrole, du thiophène, du o-crésol, du C₇H₈O (notamment du m-crésol), du C₆H₁₀C1NH₂ (notamment du monochloro-2-méthyl-pent-2-ène), du C₅H₁₀S (notamment de l'éthiothiolprop-1-ène), ou du C₄H₆Cl₂O₂ (notamment du dichloroacétate d'éthyle), ainsi que leurs dérivés ou isomères.

Suivant un autre mode de réalisation du procédé suivant l'invention, celui-ci comprend en outre, après l'étape de séparation à l'état solide, un déplacement de l'agent précipitant par ledit composé volatil dans ledit sel précipité séparé, avec formation d'un sel d'acide phosphorique du composé volatil à soumettre audit traitement thermique. Dans certains cas, l'agent précipitant, tout en ayant des propriétés tout à fait favorables pour l'étape de précipitation, ne répond pas aux exigences requises pour le composé volatil à utiliser dans le procédé suivant l'invention (par exemple, une température d'ébullition trop élevée, une toxicité trop élevée, etc....). Ce mode de réalisation permet alors de substituer à l'agent précipitant du phosphate un composé volatil répondant à ces exigences pour produire de l'acide phosphorique concentré. Avantageusement, le composé volatil peut avoir un point d'ébullition inférieur à celui de l'agent précipitant, pour améliorer le rendement de l'évaporation.

Dans la WO 97/00714 précitée, on décrit déjà une étape de déplacement de l'agent précipitant dans le phosphate filtré par un composé alcalin ou azoté, par exemple KOH, NH₃ ou de l'urée, pour produire un phosphate de métal alcalin, d'ammonium ou d'urée. Un processus semblable est décrit par exemple dans l'abrégé du Chemical Abstracts 110, 1989 : 138052, où du phosphate de mélamine est déplacé par NH₃ ou Na pour former des phosphates de ces substances. Dans Cellulose, Lignin and Paper 23, 1957, colonne 18606, on décrit le traitement de phosphate d'aniline par NH₃ pour produire du NH₄PO₄ utilisable comme engrais.

Aucun de ces procédés ne décrit ni ne suggère l'utilisation d'un tel déplacement pour concentrer la solution d'acide phosphorique mise en oeuvre au départ.

On connaît par ailleurs un procédé de récupération d'amines et d'acides volatils à partir de sels d'amines, par exemple de chlorhydrate d'amine. Ce procédé comprend un déplacement de l'acide volatil cette fois par un acide non volatil, par exemple par de l'acide phosphorique. Le phosphate obtenu subit alors un traitement thermique destiné à décomposer le sel formé et à récupérer l'amine évaporée (voir US-A-5227483).

Ce procédé n'a toutefois pas été prévu pour produire de l'acide phosphorique pur, concentré. L'acide phosphorique est, après évaporation de l'amine, recyclé à l'étape de déplacement avec des traces d'amine non évaporées et les phosphates de métal alcalin ou alcalino-terreux ajoutés au cours du procédé. On envisage aussi à titre éventuel, une extraction de l'acide non volatil par un solvant du type alcool ou éther et une séparation ultérieure de ceux-ci par exemple par distillation.

Suivant un mode de réalisation avantageux de réalisation de l'invention, le déplacement comprend une introduction dans ledit sel précipité séparé d'une solution du composé volatil dans un solvant approprié, avec déplacement de l'agent précipitant par le composé volatil dans le sel d'acide phosphorique, une précipitation du sel d'acide phosphorique du composé volatil dans une phase liquide formée dudit solvant approprié, de l'agent précipitant à l'état liquide et de sel d'acide phosphorique du composé volatil non précipité, et une séparation à l'état solide du sel précipité d'acide phosphorique du composé volatil. Ici, le déplacement s'effectue dans une phase liquide, tout en produisant à nouveau en fin de processus une séparation à l'état solide d'un phosphate à traiter thermiquement.

On pourrait envisager également, dans le sel d'acide phosphorique de l'agent précipitant, un déplacement de l'agent précipitant par une base à l'état gazeux, par exemple de l'ammoniac.

Avantageusement, l'agent précipitant est insoluble ou difficilement soluble dans le solvant approprié pour le déplacement. Alors, le procédé comprend en outre une séparation par décantation dans ladite phase liquide formée, d'une part, du solvant approprié dans lequel est dissous du sel d'acide phosphorique du composé volatil non précipité et, d'autre part, de l'agent précipitant, le solvant pouvant éventuellement être recyclé alors pour former la solution du composé volatil utilisée dans le déplacement et l'agent précipitant pouvant éventuellement être recyclé à ladite étape d'addition. Par un choix approprié du solvant par rapport à l'agent précipitant utilisé on peut ainsi séparer aisément ces deux composants à l'état liquide, par décantation. Cette opération peut s'effectuer aisément lorsque le solvant utilisé pour le déplacement est de l'eau ammoniacale et que l'agent précipitant est par exemple de l'aniline.

Suivant un mode de réalisation du procédé suivant l'invention mettant en oeuvre un déplacement, l'agent précipitant est choisi parmi le groupe comprenant des bases faibles qui forment avec l'acide phosphorique des sels insolubles ou peu solubles dans le solvant dans lequel l'acide phosphorique est en solution. On peut envisager ici, comme agent précipitant, des bases ne répondant pas aux exigences de l'invention pour le composé volatil. Ces bases peuvent par exemple avoir un point d'ébullition supérieur à celui de l'acide phosphorique. Il suffit donc qu'elles forment avec l'acide phosphorique un sel insoluble ou peu soluble dans le solvant dans lequel l'acide phosphorique est en solution, de façon à former un précipité. On peut donc citer, en plus des agents précipitants déjà cités, des bases faibles du type de l'urée, de la mélamine et des bases analogues.

Pour le déplacement prévu dans un mode de réalisation du procédé suivant l'invention, le composé volatil est choisi parmi le groupe comprenant des bases plus fortes que l'agent précipitant utilisé. Par exemple le composé volatil peut être choisi parmi le groupe comprenant l'ammoniac et des amines primaires, secondaires ou tertiaires. On pourrait envisager par exemple des dérivés aliphatiques, aryliques ou phényliques d'ammonium, comme de la méthylamine, de l'éthylamine, de la diéthylamine, de la triéthylamine, de la dibutylamine, de la cyclohexylamine, de la morpholine, de la pyrrolidine, de la pipéridine, de la pyridine, de la pipérazine, de la benzylamine, de la N-éthylbenzylamine, de l'éthylènediamine et analogues.

Suivant une forme de réalisation perfectionnée du procédé suivant l'invention, l'évaporation du composé volatil a lieu à une température inférieure à celle de sa propre température de décomposition. On peut ainsi recycler le composé volatil et améliorer le rendement du processus.

Dans le cas où le composé volatil est de l'aniline, on prévoit de préférence une évaporation à une température de l'ordre d'environ 250°C à environ 360°C, sous pression réduite.

Dans le cas où le composé volatil est de l'ammoniac, on prévoit de préférence une évaporation à une température de l'ordre d'environ 300°C à environ 360°C.

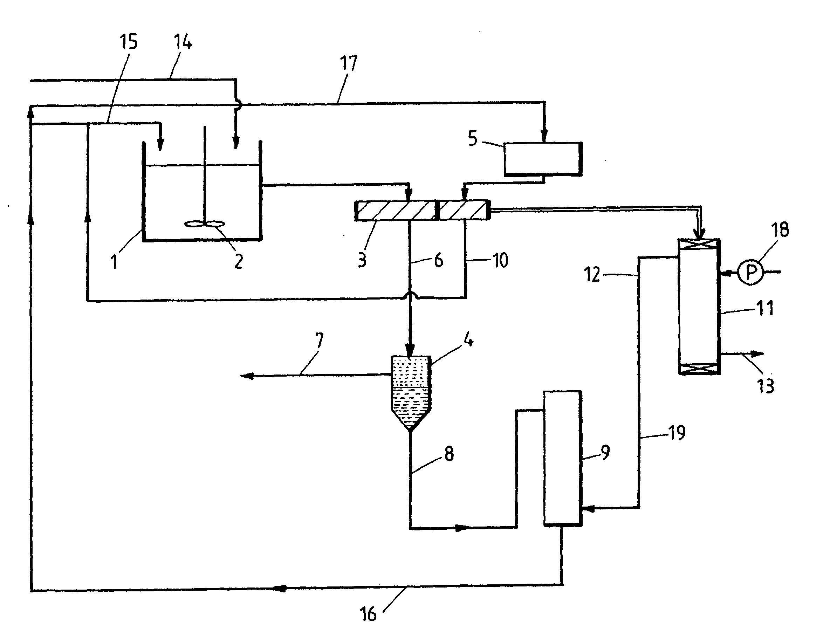

L'invention va à présent être expliquée de manière plus détaillée à l'aide d'exemples non limitatifs et en faisant référence à la figure unique annexée.

### Exemple 1

### a) Précipitation.

Sur 11 d'une solution aqueuse d'acide phosphorique à 1 mole/l (H₃PO₄ à environ 10%), on verse 93,13 g d'aniline pure à 99% pendant 30 minutes, sous agitation, ce qui a pour effet une précipitation de phosphate d'aniline. Pendant 1 minute, on filtre le précipité sur du papier filtre (Whaterman, 110 mm O), on le lave à l'eau, et on le sèche, en le soumettant à une exposition à l'air libre pendant 3 jours. La masse du précipité est de 16,15 g, et sa couleur est blanche. Ce précipité contient 76% d'aniline.

Cette expérience est répétée pour obtenir une quantité suffisante de phosphate d'aniline.

### b) Evaporation.

Ensuite, dans un ballon de 500 ml muni d'une pompe à vide, on introduit 50g de phosphate d'aniline, sous pression réduite, puis on chauffe à 250°C, pendant 60 sec. Le phosphate d'aniline se liquéfie au fond du ballon et la température des vapeurs d'aniline dégagées est de 210°C. La pression à l'intérieur du montage est de 195 à 40 mbars et la durée de l'évaporation est de 60 secondes.

Le produit de distillation, séparé au haut du ballon, est formé, après condensation, de 29,79 g d'aniline (aniline à 100%).

Au fond du ballon, on observe un liquide légèrement bleu, très visqueux, constitué de 15,44 g d'acide phosphorique à 98,75%.

### Exemple 2

Après avoir préparé du phosphate d'aniline comme décrit dans l'exemple 1 a), on procède conformément à l'étape b) de l'exemple 1 en introduisant dans le ballon 70 g de phosphate d'aniline. La durée de l'évaporation est de 10 minutes. On obtient ainsi 42,87 g d'aniline et 21,37 g d'acide phosphorique très visqueux à 98,24%.

### Exemple 3

### a) Précipitation.

On procède comme décrit dans l'exemple 1, a), et on sépare ainsi un gâteau de filtration formé de phosphate d'aniline.

### b) Déplacement.

Dans un récipient réactionnel 1 (voir figure), muni d'un agitateur 2, on introduit en 14 50 g de phosphate d'aniline, puis on ajoute en 15, par portions de 10 ml, 40 ml d'une solution aqueuse à 25% de NH₃. Après une durée totale de réaction de 45 minutes, on fait passer le tout sur un filtre 3, que l'on lave ensuite à plusieurs reprises avec une solution ammoniacale provenant d'un réservoir 5. On obtient un gâteau de filtration formé de 16,8 g de phosphate d'ammonium qu'on laisse éventuellement sécher à l'air libre, ce qui donne 12 g de phosphate d'ammonium sec.

Le filtrat obtenu en 6, avant lavage, est formé de 27 ml d'aniline à l'état liquide et de 30 ml d'eau contenant des ions NH₄⁺ encore en solution et il est transféré à un décanteur 4 où l'aniline formant la phase la plus légère est séparée en 7 et où la phase aqueuse est soutirée en 8. Cette phase aqueuse est ensuite transvasée dans un absorbeur 9 où de l'ammoniac est solubilisé dans cette phase, qui est alors reçyclée dans le récipient réactionnel 1 ou dans le réservoir 5, par les conduits 16 et 15 ou respectivement 17. L'aniline séparée peut être recyclée à l'étape d'addition du procédé suivant l'invention.

La solution de lavage du gâteau de filtration est récupérée en 10 pour être recyclée dans le récipient réactionnel 1 par le conduit 15.

### c) Evaporation.

On introduit le gâteau de filtration obtenu sous b) dans un évaporateur 11 muni d'une pompe à vide 18. On augmente progressivement la température jusqu'à ce qu'il y ait liquéfaction de la matière solide, puis on applique à l'intérieur de l'évaporateur une pression réduite.

La température appliquée est de l'ordre de 250 jusqu'à 300°C, sous un vide de 55 mbars. Le temps de séjour dans l'évaporateur est de 1h30.

On obtient au sommet de l'évaporateur des vapeurs d'ammoniac en une quantité calculée de 4,05 g, qui sont renvoyées, comme déjà indiqué, à l'absorbeur 9, pour une solubilisation, par l'intermédiaire du conduit 19.

Au fond de l'évaporateur, on soutire en 13 7,95 g d'acide phosphorique concentré ayant une teneur de 7% en NH₄⁺.

### Exemple 4

On a procédé à l'élaboration de deux modèles théoriques de préparation de H₃ PO₄ concentré. Le premier modèle comprend une précipitation de phosphate d'aniline comme dans la présente invention et, dans le gâteau de filtration, un entraînement à la vapeur d'eau de l'aniline conformément à l'enseignement de la demande WO-A-97/00714. Le deuxième modèle comprend la même précipitation de phosphate d'aniline et une décomposition thermique de ce sel conformément à la présente invention, suivant le mode de réalisation sans déplacement.

On traite dans les deux modèles 40 tonnes/h de phosphate d'aniline, et l'opération est arrêtée lorsqu'on obtient de l'acide phosphorique contenant encore 5% d'aniline.

L'énergie nécessaire pour l'entraînement à la vapeur d'eau est de 1500 kWh par tonne de phosphate d'aniline.

L'énergie nécessaire pour la décomposition thermique par évaporation suivant la présente invention est de 140 kWh par tonne de phosphate d'aniline, c'est-à-dire dix fois moins que dans le processus précédent.

Il doit être entendu que la présente invention n'est en aucune façon limitée aux modes de réalisation décrits ci-dessus et que bien des modifications peuvent y être apportées sans sortir du cadre de l'invention indiquée dans les revendications annexées.

## Revendications

1. Procédé de concentration d'acide phosphorique en solution dans un solvant, comprenant
- une addition à cette solution d'un agent précipitant capable de former avec l'acide phosphorique un sel peu soluble dans le solvant, cette addition étant effectuée en une quantité suffisante pour provoquer une précipitation du sel d'acide phosphorique de l'agent précipitant dans le solvant,
- une séparation à l'état solide du sel précipité d'acide phosphorique de l'agent précipitant à partir du solvant, et
- un traitement thermique d'un sel d'acide phosphorique,
**caractérisé en ce que** le traitement thermique comprend,
- par chauffage, une fusion d'un sel d'acide phosphorique qui est issu dudit sel précipité séparé de l'agent précipitant, est un sel d'un composé volatil ayant un point d'ébullition inférieur à celui de l'acide phosphorique, et présente une température de décomposition thermique inférieure au point d'ébullition de l'acide phosphorique,
- une décomposition thermique du sel fondu avec séparation par évaporation du composé volatil susdit, et
- une récolte d'acide phosphorique concentré, non évaporé.

2. Procédé suivant la revendication 1, **caractérisé en ce que** l'agent précipitant est ledit composé volatil ayant un point d'ébullition inférieur à celui de l'acide phosphorique et **en ce que** le sel d'acide phosphorique en fusion est ledit sel précipité séparé d'acide phosphorique de l'agent précipitant, l'agent précipitant évaporé étant éventuellement recyclé vers ladite étape d'addition.

3. Procédé suivant la revendication 2, **caractérisé en ce que** l'agent précipitant est un composé organique qui présente une molécule de caractère acido-basique au sens de Lewis présentant un ou des sites actifs pourvus d'un doublet électronique libre et qui donne lieu avec l'acide phosphorique à une réaction équilibrée.

4. Procédé suivant l'une ou l'autre des revendications 2 et 3, **caractérisé en ce que** l'agent précipitant est choisi parmi le groupe comprenant les amines primaires, secondaires et tertiaires et les amines aromatiques, ainsi que des dérivés ou isomères de ces composés.

5. Procédé suivant la revendication 4, **caractérisé en ce que** l'amine aromatique est de l'aniline, de la p-toluidine ou de la 3-méthyl-2-naphtylamine, ou leurs sels, tels que leurs phosphates, ou encore leurs dérivés, tels que des dérivés alkyle inférieur ou nitro, ou leurs isomères.

6. Procédé suivant la revendication 1, **caractérisé en ce qu'**il comprend en outre, après l'étape de séparation à l'état solide, un déplacement de l'agent précipitant par ledit composé volatil dans ledit sel précipité séparé, avec formation d'un sel d'acide phosphorique du composé volatil à soumettre audit traitement thermique.

7. Procédé suivant la revendication 6, **caractérisé en ce que** le déplacement comprend une introduction dans ledit sel précipité séparé d'une solution du composé volatil dans un solvant approprié, avec déplacement de l'agent précipitant par le composé volatil dans le sel d'acide phosphorique, une précipitation du sel d'acide phosphorique du composé volatil dans une phase liquide formée dudit solvant approprié, de l'agent précipitant à l'état liquide et de sel d'acide phosphorique du composé volatil non précipité, et une séparation à l'état solide du sel précipité d'acide phosphorique du composé volatil.

8. Procédé suivant la revendication 7, **caractérisé en ce que** l'agent précipitant est insoluble ou difficilement soluble dans le solvant approprié pour le déplacement et **en ce que** le procédé comprend en outre une séparation par décantation dans ladite phase liquide formée, d'une part, du solvant approprié dans lequel est dissous du sel d'acide phosphorique du composé volatil non précipité et, d'autre part, de l'agent précipitant, le solvant pouvant éventuellement être recyclé alors pour former la solution du composé volatil utilisée dans le déplacement et l'agent précipitant pouvant éventuellement être recyclé à ladite étape d'addition.

9. Procédé suivant l'une quelconque des revendications 6 à 8, **caractérisé en ce que** ledit composé volatil présente un point d'ébullition inférieur à celui de l'agent précipitant.

10. Procédé suivant l'une quelconque des revendications 6 à 9, **caractérisé en ce que** l'agent précipitant est choisi parmi le groupe comprenant des bases faibles qui forment avec l'acide phosphorique des sels insolubles ou peu solubles dans le solvant dans lequel l'acide phosphorique est en solution.

11. Procédé suivant la revendication 10, **caractérisé en ce que** la base faible est de la mélamine, de l'urée, ou une autre base appropriée.

12. Procédé suivant l'une quelconque des revendications 6 à 10, **caractérisé en ce que** l'agent précipitant est un composé organique qui présente une molécule de caractère acido-basique au sens de Lewis présentant un ou des sites actifs pourvus d'un doublet électronique libre et qui donne lieu avec l'acide phosphorique à une réaction équilibrée.

13. Procédé suivant la revendication 12, **caractérisé en ce que** l'agent précipitant est choisi parmi le groupe comprenant les amines primaires, secondaires et tertiaires et les amines aromatiques, ainsi que des dérivés ou isomères de ces composés.

14. Procédé suivant la revendication 13, **caractérisé en ce que** l'amine aromatique est de l'aniline, de la p-toluidine ou de la 3-méthyl-2-naphtylamine, ou leurs sels, tels que leurs phosphates, ou encore leurs dérivés, tels que des dérivés alkyle inférieur ou nitro, ou leurs isomères.

15. Procédé suivant l'une quelconque des revendications 6 à 14, **caractérisé en ce que** le composé volatil est choisi parmi le groupe comprenant des bases plus fortes que l'agent précipitant utilisé.

16. Procédé suivant l'une quelconque des revendications 6 à 15, **caractérisé en ce que** le composé volatil est choisi parmi le groupe comprenant l'ammoniac et des amines primaires, secondaires et tertiaires et aromatiques.

17. Procédé suivant la revendication 16, **caractérisé en ce que** le composé volatil est choisi parmi le groupe comprenant des dérivés aliphatiques, aryliques ou phényliques d'ammonium, comme de la méthylamine, de l'éthylamine, de la diéthylamine, de la triéthylamine, de la dibutylamine, de la cyclohexylamine, de la morpholine, de la pyrrolidine, de la pipéridine, de la pyridine, de la pipérazine, de la benzylamine, de la N-éthylbenzylamine, de l'éthylènediamine et analogues.

18. Procédé suivant l'une quelconque des revendications 1 à 17, **caractérisé en ce que** l'évaporation du composé volatil a lieu à une température inférieure à celle de sa température de décomposition thermique.

## Claims

1. A process for concentrating phosphoric acid in solution in a solvent, comprising
- adding to said solution a precipitating agent able to form with the phosphoric acid a salt which is sparingly soluble in the solvent, said addition being carried out in sufficient quantity to induce precipitation of the phosphoric acid salt of the precipitating agent in the solvent,
- separation in the solid state of the precipitated phosphoric acid salt of the precipitating agent from the solvent, and
- heat treatment of a phosphoric acid salt,
**characterised in that** the heat treatment comprises,
- by heating, fusion of a phosphoric acid salt, which originates from said separated precipitated salt of the precipitating agent, is a salt of a volatile compound having a boiling point below that of phosphoric acid and has a thermal decomposition temperature below the boiling point of phosphoric acid,
- thermal decomposition of the fused salt with separation by evaporation of said volatile compound, and
- collecting non-evaporated concentrated phosphoric acid.

2. A process according to claim 1, **characterised in that** the precipitating agent is said volatile compound having a boiling point below that of phosphoric acid, and **in that** the fused phosphoric acid salt is said separated precipitated phosphoric acid salt of the precipitating agent, the evaporated precipitating agent being optionally recycled towards said addition stage.

3. A process according to claim 2, **characterised in that** the precipitating agent is an organic compound which has a Lewis-type acid-base molecule, having one or mores active sites provided with a free electron pair and which with phosphoric acid gives rise to a balanced reaction.

4. A process according to either one of claims 2 and 3, **characterised in that** the precipitating agent is chosen from the group comprising the primary, secondary and tertiary amines and the aromatic amines, as well as derivatives or isomers of these compounds.

5. A process according to claim 4, **characterised in that** the aromatic amine is aniline, p-toluidine or 3-methyl-2-naphthyl amine, or their salts, such as their phosphates or else their derivatives, such as lower alkyl or nitro derivatives, or their isomers.

6. A process according to claim 1, **characterised in that** it further comprises, after the stage of separation in the solid state, displacement of the precipitating agent by said volatile compound in said separated precipitated salt, with formation of a phosphoric acid salt of the volatile compound to be subjected to said heat treatment.

7. A process according to claim 6, **characterised in that** the displacement comprises introducing into said separated precipitated salt a solution of the volatile compound in a suitable solvent, with displacement of the precipitating agent by the volatile compound in the phosphoric acid salt, precipitating the phosphoric acid salt of the volatile compound in a liquid phase formed from said suitable solvent, the precipitating agent in the liquid state and phosphoric acid salt of the non-precipitated volatile compound, and separation in the solid state of the precipitated phosphoric acid salt of the volatile compound.

8. A process according to claim 7, **characterised in that** the precipitating agent is insoluble or is not readily soluble in the suitable solvent for displacement, and **in that** the process further comprises separation by decantation in said liquid phase formed, on the one hand, of the suitable solvent in which is dissolved phosphoric acid salt of the non-precipitated volatile compound and, on the other hand, of the precipitating agent, it being possible, optionally, for the solvent to be then recycled to form the solution of the volatile compound used in the displacement and it being possible, optionally, for the precipitating agent to be recycled to said addition stage.

9. A process according to any one of claims 6 to 8, **characterised in that** said volatile compound has a boiling point below that of the precipitating agent.

10. A process according to any one of claims 6 to 9, **characterised in that** the precipitating agent is chosen from the group comprising weak bases which form with the phosphoric acid salts which are insoluble or are not readily soluble in the solvent in which the phosphoric acid is in solution.

11. A process according to claim 10, **characterised in that** the weak base is melamine, urea or another suitable base.

12. A process according to any one of claims 6 to 10, **characterised in that** the precipitating agent is an organic compound which has a Lewis-type acid-base molecule, having one or mores active sites provided with a free electron pair and which with phosphoric acid gives rise to a balanced reaction.

13. A process according to claim 12, **characterised in that** the precipitating agent is chosen from the group comprising the primary, secondary and tertiary amines and aromatic amines, as well as derivatives or isomers of these compounds.

14. A process according to claim 13, **characterised in that** the aromatic amine is aniline, p-toluidine or 3-methyl-2-naphthyl amine or their salts, such as their phosphates or else their derivatives, such as lower alkyl or nitro derivatives, or their isomers.

15. A process according to any one of claims 6 to 14, **characterised in that** the volatile compound is chosen from the group comprising stronger bases than the precipitating agent used.

16. A process according to any one of claims 6 to 15, **characterised in that** the volatile compound is chosen from the group comprising ammonia and primary, secondary and tertiary and aromatic amines.

17. A process according to claim 16, **characterised in that** the volatile compound is chosen from the group comprising aliphatic, aryl or phenyl derivatives of ammonium, such as methylamine, ethylamine, diethylamine, triethylamine, dibutylamine, cyclohexylamine, morpholine, pyrrolidine, piperidine, pyridine, piperazine, benzylamine, N-ethylbenzylamine, ethylenediamine and the like.

18. A process according to any one of claims 1 to 17, **characterised in that** the evaporation of the volatile compound takes place at a temperature below that of its thermal decomposition temperature.

## Patentansprüche

1. Verfahren zur Aufkonzentrierung von Phosphorsäure in Lösung In einem Lösungsmittel, umfassend
- das Hinzufügen eines Nlederschlagsmittels zu dieser Lösung, das in der Lage ist, mit der Phoshorsäure ein Salz zu bilden, das im Lösungsmittel schwach löslich ist, wobei diese Hinzufügung In einer ausreichenden Menge erfolgt, um ein Niederschlagen des Phosphorsäuresalzes des Niederschlagmittels im Lösungsmittel zu bewirken,
- das Abscheiden des niedergeschlagenen Phosphorsäuresalzes des Niederschlagsmittels im festen Zustand ausgehend vom Lösungsmittel, und
- das Wärmebehandeln eines Phosphorsäuresalzes,
**dadurch gekennzeichnet, dass** die Wärmebehandlung folgendes umfasst:
- durch Erhitzen die Fusion eines Phosphorsäuresalzes, das aus dem niedergeschlagenen Salz hervorgeht, das vom Niederschlagsmittel abgeschieden wurde, und ein Salz einer flüchtigen Verbindung mit einem Siedepunkt, der niedriger ist als jener der Phosphorsäure und eine Temperatur der thermischen Dissoziation aufweist, die niedriger ist als der Siedepunkt der Phosphorsäure,
eine thermische Dissoziation des geschmolzenen Salzes mit Abscheidung der flüchtigen Verbindung durch Verdampfen, und
- ein Ausbringen konzentrierter, nicht verdampfter Phosphorsäure.

2. Verfahren nach Anspruch 1, **dadurch gekennzeichnet, dass** das Niederschlagsmittel eine flüchtige Verbindung mit einem Siedepunkt ist, der niedriger ist als jener der Phosphorsäure, und dass das Phosphorsäuresalz in Fusion das abgeschiedene, von der Phosphorsäure getrennte Salz des Niederschlagsmittels ist, wobei das verdampfte Niederschlagsmittel eventuell zur Hinzufügungsphase zurückgeführt wird.

3. Verfahren nach Anspruch 2, **dadurch gekennzeichnet, dass** das Niederschlagsmittel eine organische Verbindung ist, die ein saures und basisches Molekül nach Lewis enthält, das ein oder mehrere aktive Zentren mit einer freien elektronischen Doppelbindung aufweist, die mit der Phosphorsäure eine umkehrbare Reaktion ergibt.

4. Verfahren nach einem der Ansprüche 2 und 3, **dadurch gekennzeichnet, dass** das Niederschlagsmittel aus der Gruppe gewählt ist, die primäre, sekundäre, tertiäre Amine und aromatische Amine umfasst sowie Derivate oder Isomere dieser Verbindungen.

5. Verfahren nach Anspruch 4, **dadurch gekennzeichnet, dass** das aromatische Amin Anilln, p-Toluidin oder 3-Methyl-2-Naphthylamin oder eines ihrer Salze ist, wie zum Beispiel ihrer Phosphate oder Derivate, wie zum Beispiel niedrigere Alkylderivate oder Nitroderivate oder deren Isomere.

6. Verfahren nach Anspruch 1, **dadurch gekennzeichnet, dass** es unter anderem nach der Phase des Abscheidens im festen Zustand ein Verdrängen des Niederschlagsmittels durch die flüchtige Verbindung im abgeschiedenen niedergeschlagenen Salz umfasst, wobei ein Phosphorsäuresalz der flüchtigen Verbindung entsteht, das der Wärmebehandlung unterzogen wird.

7. Verfahren nach Anspruch 6, **dadurch gekennzeichnet, dass** die Verdrängung eine Einführung einer Lösung der flüchtigen Verbindung in einem geeigneten Lösungsmittel in das niedergeschlagene abgeschiedene Salz umfasst, mit Verdrängung des Niederschlagsmittels durch die flüchtige Verbindung im Phosphorsäuresalz, ein Abscheiden des Phosphorsäuresalzes aus der flüchtigen Verbindung in einer flüssigen Phase, die aus dem geeigneten Lösungsmittel, dem Niederschlagsmittel im flüssigen Zustand und aus Phosphorsäuresalz der flüchtigen, nicht abgeschiedenen Verbindung gebildet wird, und eine Abscheidung im festen Zustand des abgeschiedenen Salzes der Phosphorsäure der flüchtigen Verbindung.

8. Verfahren nach Anspruch 7, **dadurch gekennzeichnet, dass** das Niederschlagsmittel Im geeigneten Lösungsmittel für das Verdrängen unlöslich oder nur schwer löslich ist, und dass das Verfahren außerdem eine Abscheidung durch Dekantieren in der gebildeten flüssigen Phase umfasst, und zwar einerseits des geeigneten Lösungsmittels, in dem Phosphorsäuresalz der flüchtigen, nicht abgeschiedenen Verbindung gelöst ist, und, andererseits, des Niederschlagsmittels, wobei das Lösungsmittel eventuell in das Verfahren zurückgeführt werden kann, um die Lösung der flüchtigen Verbindung zu bilden, die beim Verdrängen verwendet wird, und wobei das Niederschlagsmittel eventuell zur Hinzufügungsphase zurückgeführt wird.

9. Verfahren nach einem der Ansprüche 6 bis 8, **dadurch gekennzeichnet, dass** die flüchtige Verbindung einen Siedepunkt aufweist, der niedriger Ist als der des Niederschlagsmittels.

10. Verfahren nach einem der Ansprüche 6 bis 9, **dadurch gekennzeichnet, dass** das Niederschlagsmittel aus der Gruppe gewählt ist, die schwache Basen umfasst, die mit Phosphorsäure Salze bilden, die im Lösungsmittel, in dem die Phosphorsäure In Lösung ist, unlösbar oder nur schwer lösbar sind.

11. Verfahren nach Anspruch 10, **dadurch gekennzeichnet, dass** die schwache Base Melamin, Harnstoff oder eine andere geeignete Base ist.

12. Verfahren nach einem der Ansprüche 6 bis 10, **dadurch gekennzeichnet, dass** das Niederschlagsmittel eine organische Verbindung ist, die ein saures und basisches Molekül nach Lewis enthält, das ein oder mehrere aktive Zentren aufweist, die mit einer freien elektronischen Doppelbindung versehen sind, das mit Phosphorsäure eine umkehrbare Reaktion ergibt.

13. Verfahren nach Anspruch 12, **dadurch gekennzeichnet, dass** das Niederschlagsmittel aus der Gruppe gewählt ist, die primäre, sekundäre, tertiäre und aromatische Amine sowie Derivate oder Isomere dieser Verbindungen umfasst.

14. Verfahren nach Anspruch 13, **dadurch gekennzeichnet, dass** das aromatische Amin Anilin, p-Toluidin oder 3-Methyl-2-Naphthylamin ist oder deren Salze, wie zum Beispiel deren Phosphate, oder aber deren Derivate, wie zum Beispiel niedrigere Alkylderivate oder Nitroderivate, oder deren Isomere.

15. Verfahren nach einem der Ansprüche 6 bis 14, **dadurch gekennzeichnet, dass** die flüchtige Verbindung aus der Gruppe gewährt ist, die stärkere Basen umfasst als das verwendete Niederschlagsmittel.

16. Verfahren nach einem der Ansprüche 6 bis 15, **dadurch gekennzeichnet, dass** die flüchtige Verbindung aus der Gruppe gewählt ist, die Ammoniak und primäre, sekundäre, tertiäre sowie aromatische Amine umfasst.

17. Verfahren nach Anspruch 16, **dadurch gekennzeichnet, dass** die flüchtige Verbindung aus der Gruppe gewählt ist, die aliphatische, arylische oder phenylische Ammoniumderivate umfasst, wie zum Beispiel Methylamin, Ethylamin, Dlethylamin, Triethylamin, Dibutylamin, Cyclohexylamin, Morpholin, Pyrrolidin, Piperidin, Pyridin, Piperazin, Benzylamin, N-Ethylbenzylamin, Ethylendiamin und ähnliche.

18. Verfahren nach einem der Ansprüche 1 bis 17, **dadurch gekennzeichnet, dass** die Verdampfung der flüchtigen Verbindung bei einer Temperatur eintritt, die unter der Temperatur ihrer thermischen Dissoziation liegt.
